# EUROPEAN PATENT APPLICATION

(11) **EP 2 458 551 A2**
(43) Date of publication of application: **30.05.2012**
(21) Application number: 11009397.8
(22) Date of filing: 28.11.2011
(51) Int. Cl.: G06T 7/00, G06T 7/20

(54) **Observation apparatus and observation method**

(30) Priority: 29.11.2010 JP 2010265441
(71) Applicant: OLYMPUS CORPORATION, Shibuya-ku Tokyo 151-0072 (JP)
(72) Inventor: Matsuo, Yuichiro, Tokyo 151-0072 (JP); Haneda, Toshio, Tokyo 151-0072 (JP)
(74) Representative: Schicker, Silvia

(57) **Abstract**

Provided are an observation apparatus and an observation method that allow a state change of an observation target to be observed after image-acquisition is started. An observation apparatus 1 is employed which includes an optical microscope observation unit 20 that acquires images of a sample A, a cell-state determination section 43 that determines a state change of the sample A by comparing a plurality of the images acquired at time intervals by the optical microscope observation unit 20, an area extraction section 44 that extracts an area in which a state change is detected by the cell-state determination section 43, and a scanning microscope observation unit 30 that acquires an image of the area extracted by the area extraction section 44 at higher resolution than that acquired by the optical microscope observation unit 20.

## Description

### {Technical Field}

The present invention relates to an observation apparatus and an observation method for observing biological tissue, such as cells.

### {Background Art}

A known scanning microscope system in the related art acquires a fluorescence image by acquiring an image of an entire sample with a CCD before starting screening, specifies the positions of cells by analyzing the acquired image, and irradiates only the locations where cells are present with a laser beam (exciting light) (for example, refer to Patent Literature 1). This scanning microscope system does not need to acquire an image of locations where cells are not present, thus offering the advantage that a cell image can be acquired quickly.

### {Citation List}

### {Patent Literature}

{PTL 1} Japanese Unexamined Patent Application, Publication No. 2005-128086

### {Summary of Invention}

### {Technical Problem}

However, with the scanning microscope system disclosed in Patent Literature 1, since an image of the entire sample is acquired with the CCD, and the positions of cells are specified before screening is started, there is a disadvantage in that images of cells whose state changes after image-acquisition is started cannot be acquired. Accordingly, for example, a change in the fine structure of the nucleus of a cell that has occurred during time-lapse observation cannot be observed.

The present invention provides an observation apparatus and an observation method that allow a state change of an observation target to be observed after image-acquisition is started.

### {Solution to Problem}

To achieve the above object, the present invention adopts the following solutions.
A first aspect of the present invention is an observation apparatus including a first image acquisition section that acquires images of a sample; a determination section that determines a state change of the sample by comparing the plurality of images acquired at time intervals by the first image acquisition section; an area extraction section that extracts an area in which a state change is detected by the determination section; and a second image acquisition section that acquires an image of the area extracted by the area extraction section at higher resolution than that acquired by the first image acquisition section.

According to the first aspect of the present invention, a plurality of images of the sample is acquired at time intervals by the first image acquisition section, these images are compared by the determination section to determine the state change in the sample. An area in which a state change is detected is extracted by the area extraction section, and an image of the area is acquired by the second image acquisition section at higher resolution than that acquired by the first image acquisition section.

This allows an image of an area whose state has changed during observation (for example, a cell whose fine structure in the nucleus thereof has changed) to be acquired at high resolution and thus allows the state change to be observed. For an area whose state has not changed during observation, the need to acquire an image at high resolution can be eliminated, making it possible to quickly acquire at high resolution only an image of an area in which a state change is detected.

In the first aspect, the apparatus may further include a parameter input section through which a parameter serving as a criterion for determining a state change of the sample is input, wherein the determination section may determine the state change in the sample using the parameter that is input through the parameter input section.
This allows the state change to be observed such that a parameter serving as a criterion for determining the state change in the sample is input to the parameter input section depending on the observation target, thus allowing observation of state changes of various observation targets.

In the first aspect, the parameter may be any of the brightness, number, or color of pixels that constitute an image of the sample or a combination thereof.
In the case where color is employed as a parameter for determining a state change of the sample, the state change, that is, the progress of the cell cycle, can be observed in real time by, for example, adding fluorescent probes (for example, FUCCI) that generate distinct fluorescence colors depending on the cell cycle to the sample. In the case where the number of pixels is employed as a parameter, for example, a cell whose size changes can be observed in real time. In the case where the brightness is employed as the parameter, for example, changes in the fine structure inside the cell nucleus that newly appear during observation can be observed in real time.

In the first aspect, the first image acquisition section may be a two-dimensional image acquisition device.
Employing a two-dimensional image acquisition device, such as a CCD, as the first image acquisition section allows an image of the sample to be acquired at high speed and allows the acquired image to be used as an image for determining a state change of the sample.

In the first aspect, the second image acquisition section may include a scanning section that scans a laser beam on the sample and a light detection section that detects light from the sample in association with the scanning position of the scanning section.
Employing a laser scanning microscope as the second image acquisition section allows an image of an area whose state has changed to be acquired at high resolution. Detecting fluorescence from the sample with the light detection section by using a laser beam as exciting light allows only an area in which a state change is detected to be irradiated with the exciting light, and it is possible to avoid irradiating an area whose state has not changed during observation with the exciting light, thus preventing fading in the area whose state has not changed.

A second aspect of the present invention is an observation method including a first image acquisition step of acquiring a plurality of images of a sample at time intervals; a determination step of determining a state change of the sample by comparing the plurality of images acquired at time intervals at the first image acquisition step; an area extraction step of extracting an area in which a state change is detected at the determination step; and a second image acquisition step of acquiring an image of the area extracted at the area extraction step at higher resolution than that at the first image acquisition step.

According to the second aspect of the present invention, as in the first aspect, an image of an area whose state has changed during observation (for example, a cell whose fine structure in the nucleus thereof has changed) can be acquired at high resolution, and thus allows the state change to be observed. For an area whose state has not changed during observation, the need to acquire an image at high resolution can eliminated, making it possible to quickly acquire at high resolution only an image of an area in which a state change is detected.

### {Advantageous Effects of Invention}

The present invention provides an advantage in that it allows the state change of an observation target after image-acquisition is started to be observed.

### {Brief Description of Drawings}

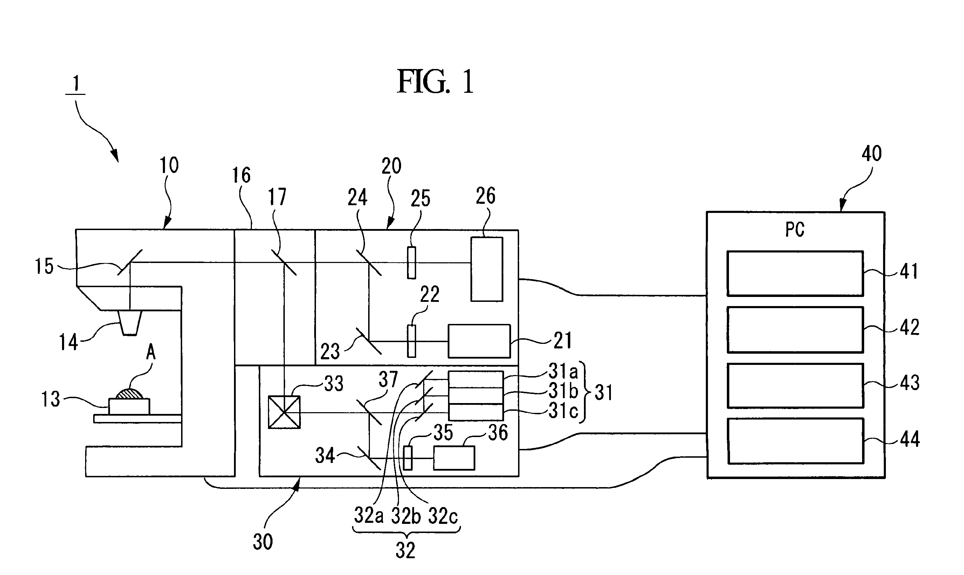

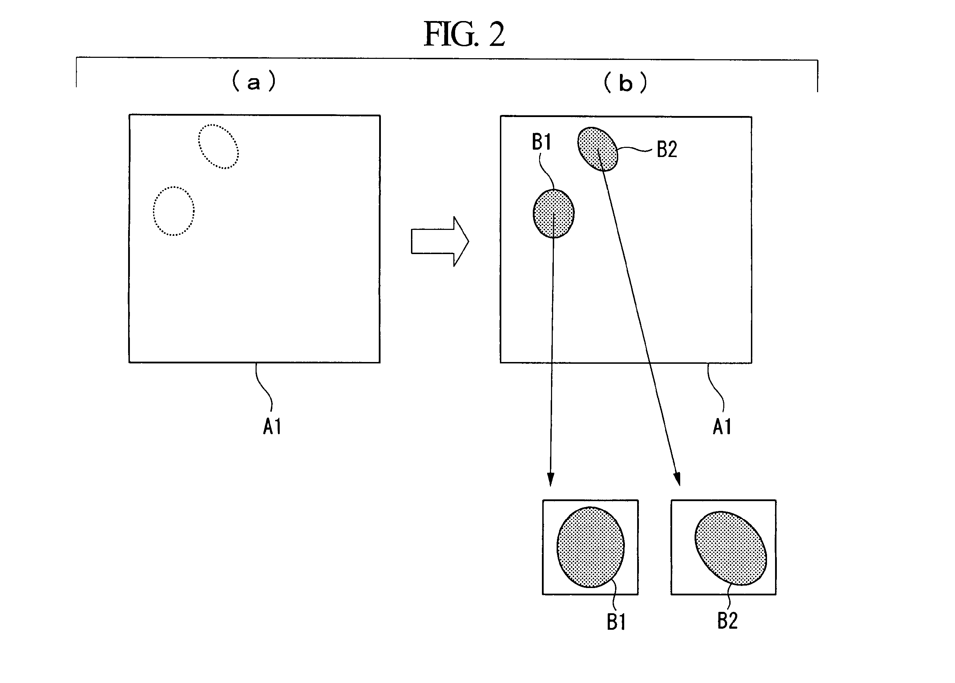

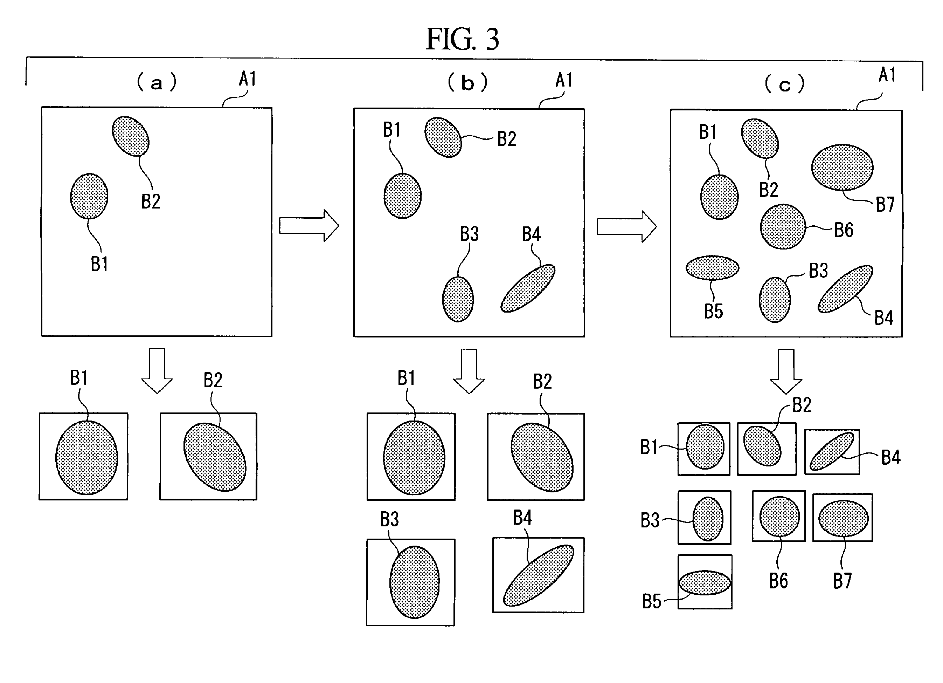

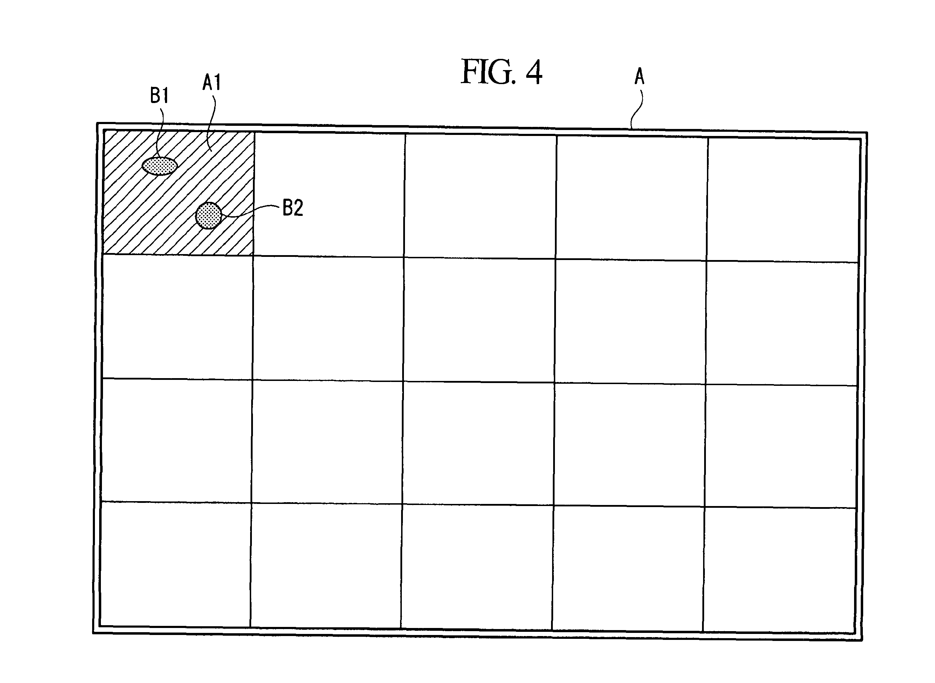

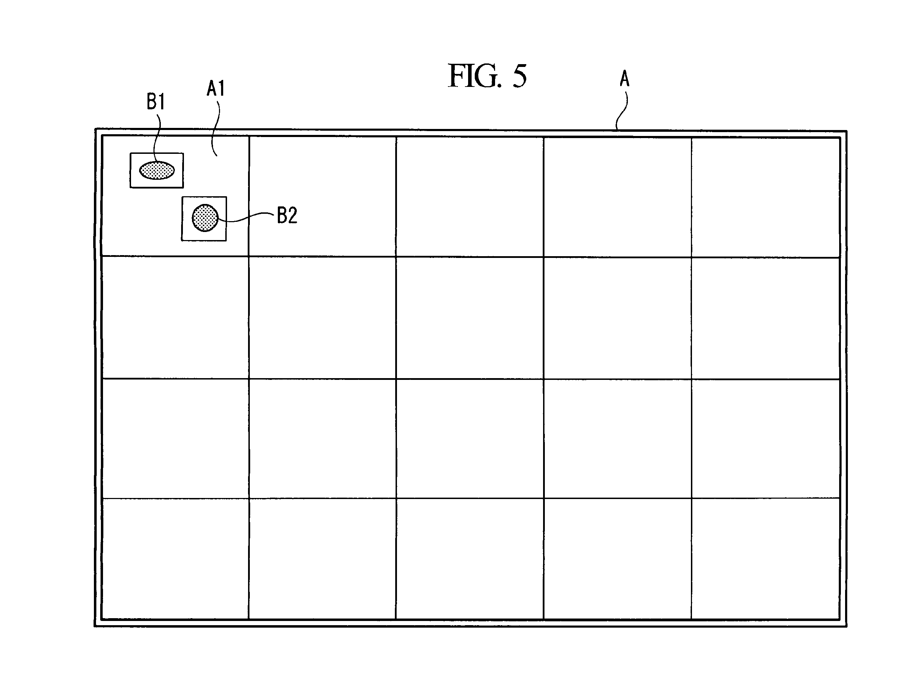

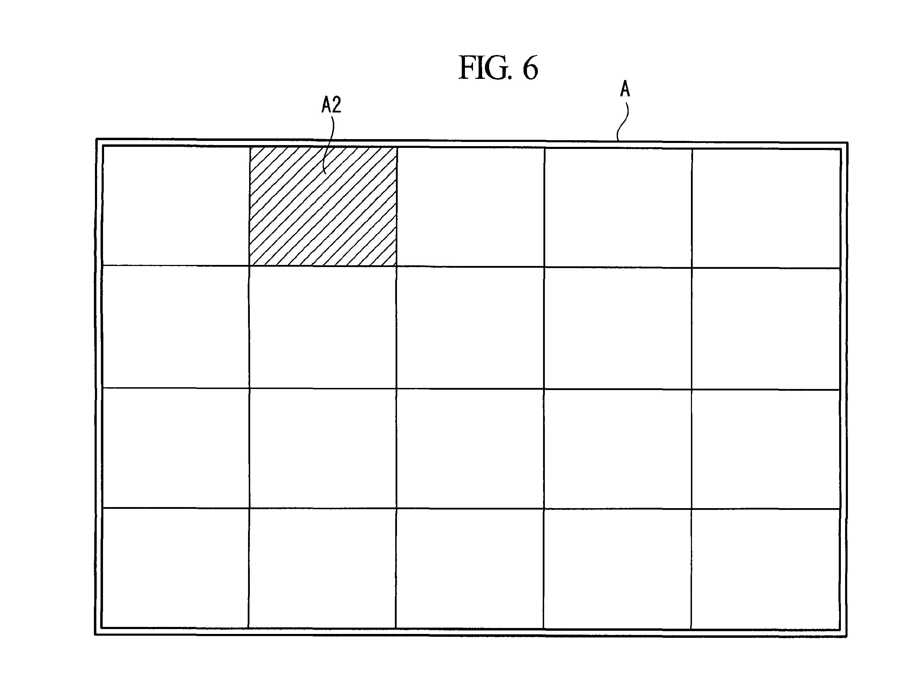

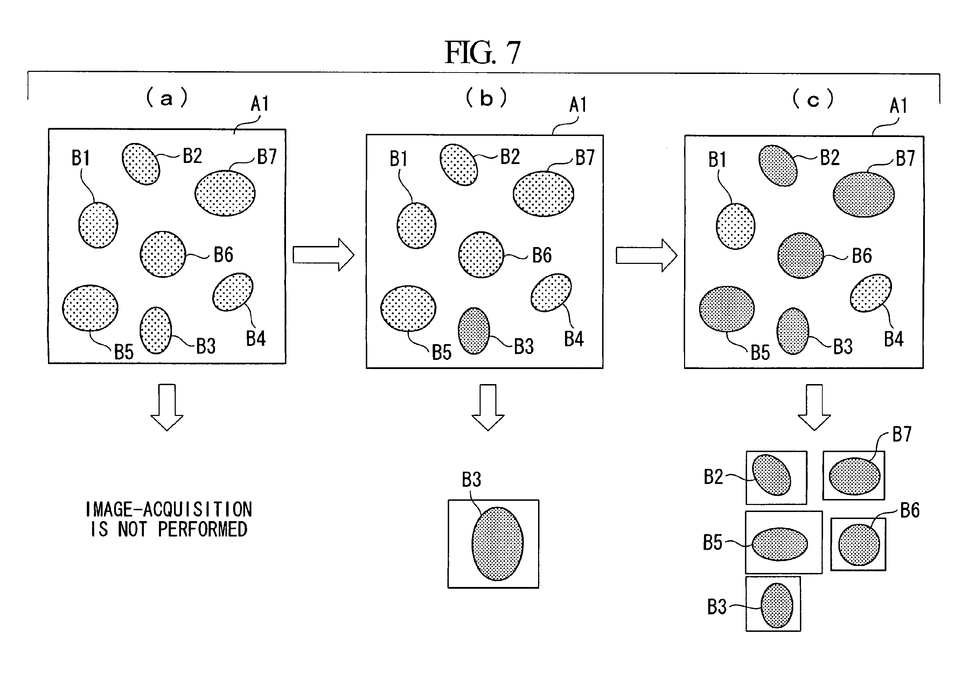

{Fig. 1} Fig. 1 is a diagram showing, in outline, the configuration of an observation apparatus according to an embodiment of the present invention.
{Fig. 2} Fig. 2 is a diagram illustrating processing performed by a cell-state determination section and an area extraction section in Fig. 1, in which (a) shows a state where a cell in which fluorescence is expressed is not present, and (b) shows a state where cells in which fluorescence is expressed are present.
{Fig. 3} Fig. 3 is a diagram illustrating an operation in the case where time-lapse observation is performed by the observation apparatus in Fig. 1, showing a state in which cells in which fluorescence is expressed appear in order from (a) to (c).
{Fig. 4} Fig. 4 is a diagram illustrating processing performed by the observation apparatus in Fig. 1 when determining the state change of a sample (block A1).
{Fig. 5} Fig. 5 is a diagram illustrating processing performed by the observation apparatus in Fig. 1 when extracting an area whose state has changed.
{Fig. 6} Fig. 6 is a diagram illustrating processing performed by the observation apparatus in Fig. 1 when determining the state change of a sample (block A2).
{Fig. 7} Fig. 7 is a diagram illustrating an operation in the case where time-lapse observation is performed by the observation apparatus in Fig. 1, showing a state in which the cell cycle proceeds so that the colors of the individual cells change in order from (a) to (c).

### {Description of Embodiments}

An observation apparatus 1 according to an embodiment of the present invention will be described hereinbelow with reference to the drawings.
The observation apparatus 1 according to this embodiment is a cell observation apparatus for observing cells in a biological sample and is equipped with a microscope main body 10, an optical microscope observation unit (first image acquisition section) 20, a scanning microscope observation unit (second image acquisition section) 30, and a PC 40, as shown in Fig. 1.

The microscope main body 10 is equipped with a motorized stage 13 on which a sample A is placed, an objective lens 14 disposed opposite the sample A, an optical-path switching section 16 that switches between light coming from the optical microscope observation unit 20 and light coming from the scanning microscope observation unit 30 and guides the light to the objective lens 14, and a mirror 15 disposed between the objective lens 14 and the optical-path switching section 16.

The motorized stage 13 operates in directions (X-Y directions) perpendicular to the optical axis of the objective lens 14, with the sample A placed thereon, to move the focal position of the objective lens 14 on the sample A in the X-Y directions.
The objective lens 14 irradiates the sample A with light emitted from the optical microscope observation unit 20 (light source 21) and the scanning microscope observation unit 30 (laser light source 31) and to collect light from the sample A.

The optical-path switching section 16 is equipped with a mirror 17 disposed at the intersection of the optical axis of the optical microscope observation unit 20 and the optical axis of the scanning microscope observation unit 30 and a drive mechanism (not shown) that moves the mirror 17 in the direction along the optical axis of the scanning microscope observation unit 30. With such a configuration, the optical-path switching section 16 irradiates the sample A with one of the light coming from the optical microscope observation unit 20 and the light coming from the scanning microscope observation unit 30 and guides the light from the sample A to one of the optical microscope observation unit 20 and the scanning microscope observation unit 30.

Specifically, the mirror 17 is disposed at the intersection of the optical axis of the optical microscope observation unit 20 and the optical axis of the scanning microscope observation unit 30 so that the optical-path switching section 16 reflects the light coming from the scanning microscope observation unit 30 toward the objective lens 14 (mirror 15) and reflects the light from the sample A at that time toward the scanning microscope observation unit 30 (XY scanner 33). Furthermore, the optical-path switching section 16 moves the mirror 17 out of the optical axis of the microscope observation unit 20 to allow the light coming from the optical microscope observation unit 20 to pass therethrough toward the objective lens 14 (mirror 15) and to allow the light from the sample A at that time to pass therethrough toward the optical microscope observation unit 20 (dichroic mirror 24).

The optical microscope observation unit 20 is equipped with a light source 21, an excitation filter 22, a mirror 23, a dichroic mirror 24, an emission filter 25, and a CCD (two-dimensional image acquisition device) 26 and is configured to acquire an image of the sample A at relatively low resolution.

An example of the light source 21 is a mercury xenon lamp, which is configured to emit light with a wide range of wavelength. The light source 21 is configured to emit excitation light that excites, for example, a fluorescent material that specifically adheres to or is expressed in an observation target in the sample A.

The excitation filter 22 extracts light with a wavelength necessary for exciting the fluorescent material from the light emitted from the light source 21.
The mirror 23 reflects the light from the light source 21 that has passed through the excitation filter 22 toward the dichroic mirror 24.

The dichroic mirror 24 reflects the light from the light source 21 toward the optical-path switching section 16 and allows the light from the sample A collected by the objective lens 14 to pass therethrough. Thus, the dichroic mirror 24 separates the light from the light source 21 and the light from the sample A.

The emission filter 25 blocks light other than the light from the sample A in the light that has passed through the dichroic mirror 24.
The CCD (charge coupled device) 26 performs photoelectrical conversion on the light from the sample A, which has passed through the emission filter 25, and outputs an electrical signal to the PC 40 as image information of the sample A.

The scanning microscope observation unit 30 is equipped with a laser light source 31, a light combining section 32, an XY scanner (scanning section) 33, a mirror 34, an emission filter 35, a PMT (light detection section) 36, and a dichroic mirror 37 and is configured to acquire an image of the sample A (an image of an area extracted by an area extraction section 44, to be described later) at higher resolution than with the optical microscope observation unit 20.

The laser light source 31 has laser light sources 31a, 31b, and 31c that emit laser beams of different wavelengths and switches between the laser beams from the laser light sources 31a, 31b, and 31c depending on the observation target. The laser light sources 31a, 31b, and 31c individually emit, for example, excitation light that excites a fluorescent material that specifically adheres to or is expressed in an observation target in the sample A.

The light combining section 32 has dichroic mirrors 32a, 32b, and 32c that combine laser beams from the laser light sources 31a, 31b, and 31c onto the same optical axis. Specifically, the dichroic mirror 32a reflects a laser beam from the laser light source 31a toward the dichroic mirror 32b. The dichroic mirror 32b allows the laser beam from the laser light source 31a to pass therethrough and reflects a laser beam from the laser light source 31b toward the dichroic mirror 32c. The dichroic mirror 32c allows a laser beam from the laser light source 31c to pass therethrough toward the XY scanner 33 and reflects the laser beams from the laser light source 31a and the laser light source 31b toward the XY scanner 33. The dichroic mirror 32a may be an ordinary mirror because it need only reflect the laser beam from the laser light source 31a.

The XY scanner 33 has a pair of galvanometer mirrors coated with, for example, silver (not shown), the pivot angles of which are changed, and which are driven by a raster scanning method. This allows a laser beam from the laser light source 31 to scan the sample A in two dimensions.

The dichroic mirror 37 allows a laser beam from the laser light source 31 to pass therethrough and reflects light from the sample A collected by the objective lens 14 toward the mirror 34. Thus, the dichroic mirror 37 separates the laser beam from the laser light source 31 and the light from the sample A.

The mirror 34 reflects the light from the sample A reflected by the dichroic mirror 37 toward the emission filter 35.
Of the light reflected by the dichroic mirror 37, the emission filter 35 blocks light other than that from the sample A.

The photomultiplier tube (PMT) 36 performs photoelectrical conversion on the light from the sample A that has passed through the emission filter 35 and outputs an electrical signal as image information of the sample A to the PC 40.

The PC 40 is a personal computer, which includes, as functions, a parameter input section 41, a cell detection section 42, a cell-state determination section (determination section) 43, and an area extraction section 44 and generates an image from image information output from the optical microscope observation unit 20 (CCD 26) and the scanning microscope observation unit 30 (PMT 36).

The parameter input section 41 is an input device, such as a touch panel, a keyboard, or a mouse, with which a threshold value for detecting cells in the sample A, to be described later, and a parameter serving as a criterion for determining a state change of the sample A are input.

Here, examples of the parameter serving as a criterion for determining the state change of the sample A include any of the brightness, number, or color of pixels that constitute an image of the sample A or a combination thereof. Here, a description is made on the assumption that the brightness of pixels that constitute an image of the sample A is input to the parameter input section 41 as the parameter serving as the criterion for determining the state change of the sample A.

The cell detection section 42 detects cells from an image of the sample A acquired by the optical microscope observation unit 20 (CCD 26). Specifically, as a cell, the cell detection section 42 detects, from the image of the sample A acquired by the optical microscope observation unit 20 (CCD 26), a block of pixels having a brightness higher than or equal to a predetermined threshold value. In this case, the block may also be detected as a cell only when the block of pixels is larger than or equal to a predetermined size.

The cell-state determination section 43 determines the state change of the sample A by comparing a plurality of images acquired at time intervals by the optical microscope observation unit 20 (CCD 26).
Specifically, the cell-state determination section 43 compares a plurality of images acquired at time intervals by the optical microscope observation unit 20 (CCD 26), and if a change occurs in an area detected as a cell by the cell detection section 42, the cell-state determination section 43 determines that the state of the sample A has changed. At that time, the cell-state determination section 43 determines the state change of the sample A by using a parameter input to the parameter input section 41.

The area extraction section 44 extracts an area in which a state change is detected by the cell-state determination section 43.
The PC 40 outputs information of the area extracted by the area extraction section 44 to the scanning microscope observation unit 30 and allows an image of the extracted area to be acquired by the scanning microscope observation unit 30 at high resolution.

The foregoing processing will be described hereinbelow using specific examples shown in Figs. 2(a) and 2(b). Figs. 2(a) and 2(b) illustrate images of the sample A (block A1) in the case where time-lapse observation is performed, in which Fig. 2(a) shows a state where a cell in which fluorescence is expressed is not present, and Fig. 2(b) shows a state where cells in which fluorescence is expressed are present.

In the state shown in Fig. 2(a), because it is not determined by the cell-state determination section 43 that the state of the sample A has changed, there is no area to be extracted by the area extraction section 44. As a result, there is no image to be acquired by the scanning microscope observation unit 30 (PMT 36) at high resolution.

If the state shown in Fig. 2(a) shifts to the state shown in Fig. 2(b), it is determined by the cell-state determination section 43 that the state of the sample A has changed, and areas in which a state change is detected, that is, the areas of cells B1 and B2 where fluorescence is newly expressed, are extracted by the area extraction section 44. Then, images of the areas of the cells B1 and B2 extracted in this way are acquired at high resolution.

The operation of the observation apparatus 1 with the above configuration will be described hereinbelow.
In the case where time-lapse observation is started in the observation apparatus 1 according to this embodiment, first, the mirror 17 is removed from the optical axis of the optical microscope observation unit 20 by the optical-path switching section 16. This allows light coming from the optical microscope observation unit 20 (light source 21) to pass therethrough toward the objective lens 14 (mirror 15).

In this state, light is emitted from the light source 21, and the emitted light is radiated onto the sample A by the objective lens 14 via the excitation filter 22, the mirror 23, the dichroic mirror 24, the optical-path switching section 16, and the mirror 15. In the sample A, a fluorescent material that specifically adheres to or is expressed in a cell, which is the observation target, is excited, and the generated fluorescence is collected by the objective lens 14.

This fluorescence enters the CCD 26 via the mirror 15, the optical-path switching section 16, the dichroic mirror 24, and the emission filter 25. The CCD 26 acquires an image of the sample A at relatively low resolution, performs photoelectrical conversion on the fluorescence from the sample A and outputs an electrical signal as image information of the sample A to the PC 40 (first image acquisition step).

Next, the cell is detected from the image of the sample A acquired by the optical microscope observation unit 20 (CCD 26) by the cell detection section 42.
Next, a plurality of images acquired at time intervals by the optical microscope observation unit 20 (CCD 26) are compared by the cell-state determination section 43, and the state change of the sample A is determined (determination step). Specifically, the plurality of images acquired at time intervals are compared by the cell-state determination section 43, and if an area detected as a cell by the cell detection section 42 has changed, it is determined that the state of the sample A has changed.

Next, the area in which a state change is detected by the cell-state determination section 43 is extracted by the area extraction section 44 (area extraction step). Information of the thus-extracted area is output to the scanning microscope observation unit 30, and an image of the extracted area is acquired at high resolution by the scanning microscope observation unit 30 (second image acquisition step).

In this case, the mirror 17 is disposed in the optical axis of the optical microscope observation unit 20 by the optical-path switching section 16. This allows a laser beam from the scanning microscope observation unit 30 to be reflected toward the objective lens 14 (mirror 15). In this state a laser beam is emitted from the laser light source 31, and the emitted laser beam is scanned in two dimensions by the XY scanner 33 to irradiate the area extracted by the area extraction section 44, that is, the area in which a state change is detected by the cell-state determination section 43.

The laser beam that is scanned in this way is radiated onto the sample A by the objective lens 14 via the optical-path switching section 16 (mirror 17) and the mirror 15. In the sample A, a fluorescent material that specifically adheres to or is expressed in the observation target (cell B) is excited, and the generated fluorescence is collected by the objective lens 14.

The fluorescence enters the PMT 36 via the mirror 15, the optical-path switching section 16 (mirror 17), the XY scanner 33, the dichroic mirror 37, the mirror 34, and the emission filter 35. The PMT 36 acquires an image of the sample A at high resolution, performs photoelectrical conversion on the fluorescence from the sample A, and outputs the electrical signal to the PC 40 as image information of the sample A. From the scanned position on the sample A by the XY scanner 33 and the image information output from the PMT 36, the PC 40 generates an image of the sample A, in which an image of the area whose state has changed is acquired at high resolution.

The foregoing processing will be described hereinbelow using the specific examples shown in Figs. 3 to 6.
As shown in Fig. 4, for example, an image of the block A1 is acquired at low resolution by the optical microscope observation unit 20 (CCD 26), and it is determined whether a cell whose state has changed is present in the block A1. If cells B1 and B2 whose state, such as fluorescence intensity, has changed are detected, images of the areas of the cells B1 and B2 are acquired by the scanning microscope observation unit 30 (PMT 36) at high resolution, as shown in Fig. 5.

Specifically, as shown in Figs. 3(a) to 3(c), image-acquisition is performed depending on the state change of the sample A. Figs. 3(a) to 3(c) illustrate images of the sample A (block A1) subjected to time-lapse observation, showing a state where cells in which fluorescence is expressed is appearing in order from Figs. 3(a) to 3(c).

In the state shown in Fig. 3(a), areas in which a state change is detected by the cell-state determination section 43, that is, the areas of the cells B1 and B2 in which fluorescence is expressed, are extracted. Next, images of the areas of the cells B1 and B2 extracted as described above are acquired at high resolution by the scanning microscope observation unit 30 (PMT 36).

In the state shown in Fig. 3(b), in addition to the areas of the cells B1 and B2, areas in which a state change is detected by the cell-state determination section 43, that is, the areas of cells B3 and B4 in which fluorescence is newly expressed, are extracted. Images of the areas of the cells B1, B2, B3, and B4 extracted as described above are acquired at high resolution by the scanning microscope observation unit 30 (PMT 36).

In the state shown in Fig. 3(c), in addition to the areas of the cells B1, B2, B3, and B4, areas in which a state change is detected by the cell-state determination section 43, that is, the areas of cells B5, B6, and B7 in which fluorescence is newly expressed, are extracted. Images of the areas of the cells B1, B2, B3, B4, B5, B6, and B7 extracted as described above are acquired at high resolution by the scanning microscope observation unit 30 (PMT 36).

Next, as shown in Fig. 6, a block A2 of the sample A is also subjected to the same processing as that for the block A1, and if no state change is detected, image-acquisition at high resolution is not performed. From then on, the other blocks of the sample A are sequentially subjected to the same processing as that for the blocks A1 and A2, so that images of areas whose state has changed are acquired at high resolution for the entire sample A.

As described above, with the observation apparatus 1 according to this embodiment, a plurality of images of the sample A are acquired at time intervals by the optical microscope observation unit 20, these images are compared by the cell-state determination section 43, and the state change of the sample A is determined. An area in which a state change is detected is extracted by the area extraction section 44, and an image of the area is acquired by the scanning microscope observation unit 30 at higher resolution than that acquired by the optical microscope observation unit 20.

This allows an image of an area whose state has changed during observation (for example, a cell whose fine structure in the nucleus thereof has changed) to be acquired at high resolution, and thus allows the state change to be observed. For an area whose state has not changed during observation, the need to acquire an image at high resolution can eliminated, making it possible to quickly acquire at high resolution only an image of an area in which a state change is detected.

Furthermore, since the cell-state determination section 43 determines the state change of the sample A using a parameter input through the parameter input section 41, the state change of the sample A can be observed such that a parameter serving as a criterion for determining the state change of the sample A is input to the parameter input section 41 depending on the observation target, thus allowing observation of state changes of various observation targets. The parameter may also be stored in a memory (not shown) in advance.

Employing a two-dimensional image acquisition device, such as a CCD, as the optical microscope observation unit 20 allows an image of the sample A to be acquired at high speed and allows the acquired image to be used as an image for determining the state change of the sample A.

Employing a laser scanning microscope as the scanning microscope observation unit 30 allows an image of an area whose state has changed to be acquired at high resolution. Detecting fluorescence from the sample A with the PMT 36 by using a laser beam as exciting light allows only an area in which a state change is detected to be irradiated with the exciting light, and it is possible to avoid irradiating an area whose state has not changed during observation with exciting light, thus preventing fading in the area whose state has not changed.

This embodiment has been described using an example in which the brightness of a pixel group constituting an image of the sample A is used as a parameter serving as a criterion for determining the state change of the sample A; instead, any of the brightness, number, or color of pixels constituting an image of the sample A or a combination thereof may be used.

A case where color is employed as a parameter serving as a criterion for determining the state change of the sample A will be described hereinbelow.
In this case, fluorescent probes (for example, FUCCI) that emit distinct fluorescence colors depending on the cell cycle are added to the sample A, and image-acquisition is performed depending on changes in the state of the sample A, that is, changes in color, as shown in Figs. 7(a) to 7(c).

Figs. 7(a) to 7(c) illustrate images of the sample A (block A1) in the case where time-lapse observation is performed, in which the cell cycle proceeds, and the individual cells change in color in order from Fig. 7(a) to Fig. 7(c). Here, an example in which cells with green fluorescence (S, G2, and M phases) are to be observed will be described.

In the state shown in Fig. 7(a), of cells B1 to B7, a cell that generates green fluorescence is not present. Therefore, image-acquisition is not performed by the scanning microscope observation unit 30 (PMT 36).
In the state shown in Fig. 7(b), green fluorescence is generated from the cell B3. This state change is detected by the cell-state determination section 43, and the area of the cell B3 is extracted by the area extraction section 44. An image of the area of the cell B3 extracted in this way is acquired at high resolution by the scanning microscope observation unit 30 (PMT 36).

In the state shown in Fig. 7(c), green fluorescence is generated from the cells B2, B3, B5, B6, and B7. This state change is detected by the cell-state determination section 43, and the areas of the cells B2, B3, B5, B6, and B7 are extracted by the area extraction section 44. Images of the areas of the cells B2, B3, B5, B6, and B7 extracted in this way are acquired at high resolution by the scanning microscope observation unit 30 (PMT 36).

As described above, in the case where color is employed as a parameter serving as a criterion for determining the state change of the sample A, the state change, that is, the progress of the cell cycle, can be observed in real time by, for example, adding fluorescent probes that generate distinct fluorescence colors depending on the cell cycle to the sample A.
In the case where the number of pixels is employed as a parameter, for example, a cell whose size changes can be observed in real time.

Although embodiments of the present invention have been described with reference to the drawings, the specific configuration is not limited to the embodiments, and design changes etc. that do not depart from the spirit of the present invention are also encompassed.

### {Reference Signs List}

- A: sample
- 1: observation apparatus
- 10: microscope main body
- 13: motorized stage
- 14: objective lens
- 16: optical-path switching section
- 20: optical microscope observation unit (first image acquisition section)
- 21: light source
- 24: dichroic mirror
- 26: CCD (two-dimensional image acquisition device)
- 30: scanning microscope observation unit (second image acquisition section)
- 31: laser light source
- 32: light combining section
- 33: XY scanner (scanning section)
- 36: PMT (light detection section)
- 40: PC
- 41: parameter input section
- 42: cell detection section
- 43: cell-state determination section (determination section)
- 44: area extraction section

## Claims

1. An observation apparatus comprising:
a first image acquisition section that acquires images of a sample;
a determination section that determines a state change of the sample by comparing a plurality of the images acquired at time intervals by the first image acquisition section;
an area extraction section that extracts an area in which a state change is detected by the determination section; and
a second image acquisition section that acquires an image of the area extracted by the area extraction section at higher resolution than that acquired by the first image acquisition section.

2. The observation apparatus according to Claim 1, further comprising:
a parameter input section through which a parameter serving as a criterion for determining a state change of the sample is input,
wherein the determination section determines the state change of the sample using the parameter that is input through the parameter input section.

3. The observation apparatus according to Claim 2, wherein the parameter is any of the brightness, number, and color of pixels that constitute an image of the sample or a combination thereof.

4. The observation apparatus according to Claim 1, wherein the first image acquisition section is a two-dimensional image acquisition device.

5. The observation apparatus according to Claim 1, wherein the second image acquisition section includes:
a scanning section that scans a laser beam on the sample; and
a light detection section that detects light from the sample in association with the scanning position of the scanning section.

6. An observation method comprising:
a first image acquisition step of acquiring a plurality of images of a sample at time intervals;
a determination step of determining a state change of the sample by comparing the plurality of images acquired at time intervals at the first image acquisition step;
an area extraction step of extracting an area in which a state change is detected at the determination step; and
a second image acquisition step of acquiring an image of the area extracted at the area extraction step at higher resolution than that at the first image acquisition step.
